# EUROPEAN PATENT APPLICATION

(11) **EP 4 775 017 A1**
(43) Date of publication of application: **15.07.2026**
(21) Application number: 25151596.1
(22) Date of filing: 13.01.2025
(51) Int. Cl.: A01D 41/127, G01S 13/88, G01S 17/00, A01D 41/14

(54) **A METHOD FOR DETERMINING PLANT TYPES**

(71) Applicant: CNH Industrial Belgium N.V., 8210 Zedelgem (BE)
(72) Inventor: Mahieu, Thomas, 8210 Zedelgem (BE); Leenknegt, Arno, 8210 Zedelgem (BE); Maelegheer, Pieter, 8210 Zedelgem (BE); Vanlerberghe, Jasper, 8210 Zedelgem (BE); Missotten, Bart M.A., 8210 Zedelgem (BE); Verschaeve, Bertl, 8210 Zedelgem (BE); Jongmans, Dré W.J., 8210 Zedelgem (BE)
(74) Representative: CNH Industrial IP Department

(57) **Abstract**

A method (200) for determining plant types in a field in front of an agricultural harvester, the method comprising: receiving (210) a radar signal, the radar signal being a reflection of a radio wave from plant material in the field in front of the agricultural harvester; based on the radar signal, distinguishing (220) a first plant type and a second plant type in the plant material; and determining (230) a first plant height for the first plant type and a second plant height for the second plant type, the second plant height being different from the first plant height.

## Description

### TECHNICAL FIELD

This invention relates to a method for determining plant types in a field in front of an agricultural harvester, and further relates to an agricultural harvester comprising a radar sensor operationally coupled to a controller configured to carry out such a method.

### BACKGROUND

Agricultural harvesters are designed to harvest crops from a field. When harvesting crops, it is useful to monitor the field in front of the harvester to obtain information on the ground, the crops, and any obstacles ahead of the harvester. For this purpose, forward looking cameras or sensors can be used. For example, as described in EP4201189A, a radar sensor, mounted on the agricultural harvester, emits radio waves along a downward direction towards the field in front of the harvester and in an inward direction towards a central longitudinal axis of the harvester. Based on radar signals, the ground or crop profile for the field in front of the agricultural harvester can be determined.

Often, there are weeds growing among the crops in the field, and so during crop harvesting, the agricultural harvester may also harvest weeds that grow among the crops. Accidental harvesting of weeds impacts the performance and efficiency of the agricultural machine: there is a loss in yield, some of the weeds may end up in the harvested product, more power may be required during harvesting for processing the weeds. In some harvesters, extra power may be needed for destroying the harvested weeds (by using, for example, a mechanical weed seed destroyer). In, e.g., a combine harvester, harvesting weeds will increase threshing load and cleaning load for the agricultural machine.

To avoid the accidental harvesting of weeds, an operator may manually adjust operation of the agricultural harvester when the harvester approaches an area of field with lots of weeds. For example, the operator may change the speed of the agricultural harvester to save power for processing the weeds, or lift a header so that no or less weeds are harvested at all. However, such strategies rely on the operator accurately identifying weeds in the field and promptly taking the appropriate action. Accurate identification is difficult as it relies on personal judgment of what is directly observable with the operator's own eyes only. Additionally, while some weeds are high growing, visible over the crops in the field, some weeds are likely to be undergrowing, and so hidden to the naked eye by the taller crops in the field. This makes it difficult for any operator to accurately identify and locate weeds. It is also difficult to detect weeds with the current sensing technology, such as cameras or the radar sensor described above.

It is an aim of the present invention to address one or more disadvantages associated with the prior art.

### SUMMARY OF THE INVENTION

According to an aspect of the invention there is provided a method for determining an amount of weed in a field in front of an agricultural harvester. The method comprises receiving a radar signal, the radar signal being a reflection of a radio wave from plant material in the field in front of the agricultural harvester, and based on the radar signal, distinguishing a first plant type and a second plant type in the plant material. The method further comprises determining a first plant height for the first plant type and a second plant height for the second plant type, the second plant height being different from the first plant height.

Different types of plant material will provide different radar signals due to differences in shape, size, density, and moisture content. Radar signals reflected from different plant types therefore allow plant types to be distinguished, and so for example, weeds can be distinguished from crops in the field. Using radar signals provides an automatic method for distinguishing different plant types. In preferred embodiments, the second plant type may, for example, be a weed. This new method for distinguishing different crop types (e.g., weeds and crops) is more efficient and accurate than manual identification which relies on an operator's judgment and eyesight. Radar signals also allow detection of undergrowing weeds, which may be difficult, or even impossible, to detect with a video camera or through observation by the operator of the harvester, as undergrowing weeds are hidden by crops. Radar is also robust against dusty environments, and so is well-suited for use during harvesting of crops, to detect and quantify any weeds.

Determining the height of the detected plant types (crops and weeds) is useful for directing operation of the agricultural harvester, as the plant height can, for example, be used to determine the type of weed in the field, or to distinguish two different types of plants. The second plant type (for example, a weed) may have a height greater than the first plant type (a crop), and thus the second plant type may be classified as a high growing weed. Alternatively, a weed may have a height that is less than a height of a crop, and thus the weed may be classified as an undergrowing weed. This information is useful to know when determining if or how operation of the agricultural harvester should be adjusted to manage the detected weeds.

In some embodiments, the method further comprises, based on the radar signal, determining a plant density, a moisture content of the plant material, or a morphology of the plant material, wherein distinguishing the first plant type and the second plant type is based on the plant density, the moisture content of the plant material, or the morphology of the plant material.

The radar signal comprises radio waves reflected from plant material in the field in front of the agricultural harvester. Analysis of the reflected radio waves allow characteristics such as plant density, moisture content, and morphology for the plant material to be determined. As different plant types (e.g., crops and weeds) will have different densities, moisture levels, and morphologies, these characteristics are useful for distinguishing the different plant types. Determining these characteristics is also useful for obtaining more information about the plant material in the field. For example, determining a moisture content of the crops may indicate how ripe the crop is, and determining a density of the weed may allow quantification of the amount of weed in the field.

Using the now proposed method for detecting weeds in the field is useful when harvesting crops, as accidental harvesting of weeds negatively impacts the performance and efficiency of agricultural harvesters. Accurate weed detection is therefore important during crop harvesting, so that the operation of the harvester can adapt to avoid weed harvesting or to minimise the impact of harvesting weeds.

Determining that the second plant type is a weed may be based on a difference between the first plant height and the second plant height. In general, crops growing in a field will have a relatively uniform height, and when determining plant height, only one plant height is expected. When irregularities are detected in the height of plant types in the field, and in particular when two distinct plant heights are detected, this may indicate the presence of two different plant types. For example, the detection of two height levels may indicate that there are weeds growing among the crops. Two different plant heights may also correspond to the same plant type (i.e., the crop), growing to a smaller height in one area of the field compared to another. A crop having a smaller height in a particular location of the field may also indicate the presence of weeds, as the weeds will compete with the crop for resources in that area of the field, resulting in the crop growing to a smaller height. Using height, which is quantitative data, to determine that a plant type in the field is a weed is more accurate than previous methods which rely on an operator's personal judgement. Accurate weed detection is important so that accidental harvesting of weeds is avoided.

In some embodiments, determining the first plant height or the second plant height is based on the radar signal. Analysing the radar signal allows the height of plants in the field to be determined automatically and accurately. As described above, height is a useful metric for distinguishing different plant types. Radar signals also allow the height of undergrowing weeds, with a height less than the height of surrounding crops, to be determined, which is difficult using forward looking cameras or other sensing methods.

In some embodiments, the method further comprises receiving historical data, the historical data comprising a location of weeds previously detected in the field, and based on the historical data, determining that the second plant type is a weed. Using historical data indicating the previous locations of weeds, current weed locations can be predicted, which is useful for confirming if the detected plant type is actually a weed. Thus, incorporating historical data makes the method more accurate.

In some embodiments, the method further comprises receiving a camera image of the plant material in the field in front of the agricultural harvester, and detecting the first plant type or the second plant type based on the camera images. The method may further comprise determining the first plant height or the second plant height based on the camera image. Camera images may detect weeds based on a colour or morphology, for example, and so additional characteristics are considered when detecting and distinguishing plant types. Using more data to detect plant types and determine plant heights makes the method more robust.

In some embodiments, the method further comprises determining a location of the first plant type or the second plant type based on the radar signal. Locating a weed, for example, at a particular location (or position) in the field, is useful as knowledge of weed location could be used by an operator (or by a controller of the harvester itself) to adjust operation of the harvester in some way to avoid harvesting of weeds.

In some embodiments, the method further comprises determining an amount of the first plant type or the second plant type in the field in front of the agricultural harvester based on the radar signal. Determining an amount (quantity) of each plant type, (i.e. the amount of weed and crop) in the field is also important as this impacts how the operation of the harvester should be adjusted. For example, if there is a high amount of weed the harvester may decrease a forward speed (to keep a constant load on the harvester), or if there is a low amount of crop and a high amount of weed a header of the harvester may be raised so that no plant material is harvested.

In some embodiments, the method further comprises receiving a camera image of harvested plant material, and detecting the first plant type and the second plant type based on the camera image of the harvested plant material. Using camera images of harvested plant material improves the accuracy of the weed detection method. If, based on the radar signal, two plant types are distinguished (based on there being two different plant heights), and one is determined to be a weed, this can be confirmed or negated by analysing the camera images of harvested plant material, which will distinguish plant types based on different characteristics (e.g. colour or morphology).

In some embodiments, the method further comprises generating a control signal for adjusting an operation of the agricultural harvester in dependence of the first plant height and/or the second plant height.

Automatically generating a control signal for adjusting operation of the agricultural harvester in response to determining two different plant heights, one corresponding to each plant type (e.g. a weed and crop) means that accidental harvesting of weeds can be avoided or reduced. Harvesting weeds increases the load on the harvester, requiring more power for processing harvested material, and increasing operational costs.

The control signal may comprise instructions for the agricultural harvester to do at least one of the following: adjust a driving speed of the agricultural harvester, adjust operation of a threshing and/or cleaning section of the agricultural harvester, adjust operation of a residue chopping and spreading section of the agricultural harvester, activate or adjust operation of a weed seed destroyer, adjust a height of a reel of the agricultural harvester, adjust a height of a header of the agricultural harvester, or adjust a path of the agricultural harvester.

Adjusting a driving speed of the agricultural harvester, that is slowing down in an area with a high amount of weed or speeding up in an area with a low amount of weeds, means that the load on the harvester can be kept constant, which is important for ensuring optimal performance. The operation of a threshing and/or cleaning section or a residue chopping and spreading section of the agricultural harvester may also be adjusted when weeds are detected, to compensate for harvesting weeds. Similarly, activating, increasing the power of, or changing operation of the harvester so that harvested plant material does not bypass a weed seed destroyer when a lot of weeds are detected means that any weeds in the harvested plant material are effectively dealt with. Adjusting a path of the agricultural harvester means that any weeds detected in the field can be avoided. A height of a reel or a header of the agricultural harvester can also be adjusted. For example, if the weeds are very high, lifting the reel prevents any weeds being caught in the reel, and lifting the header prevents harvesting of weeds.

The control signal may comprise instructions for the agricultural harvester to bring the header to a height greater than or between the first plant height and the second plant height. When the second plant height (weed) is greater than the first plant height (crop), the header is lifted to a height greater than both plant types, and no weeds are harvested. When the second plant height (weed) is less than the first plant height (crop), the header may be lifted to a height between the two plant types, and so only the taller crops are harvested, while the weeds are not.

In some embodiments, the method further comprises storing data related to the first plant type or the second plant type, wherein the data comprises a location of the first plant type or the second plant type in the field. Storing the location of detected plant types in the field, for example storing the locations of detected weeds, means that during a subsequent pass of the harvester over the same part of the field, the presence of weeds can be predicted, using location information obtained using location sensors (e.g. GPRS sensors) and the location of weeds detected previously in that part of the field. More information is therefore used to detect the presence of weeds, making the detection method more accurate.

In some embodiments, the method further comprises displaying, on a display device, data related to the first plant type and the second plant type. The data may comprise the first plant height or the second plant height, a location of the first plant type or the second plant type, an amount of the first plant type or the second plant type in the field, a density of the first plant type or the second plant type, or a volume of the first plant type or the second plant type.

Displaying data related to the detected plant types, for example weeds, allows an operator to be better informed if, for example, they choose to manually adjust operation of the harvester.

According to a further aspect of the invention, an agricultural harvester is provided comprising a radar sensor configured to receive a radar signal being a reflection of a radio wave from plant material in a field in front of the agricultural harvester, and a controller, operationally coupled to the radar sensor and configured to carry out the method described above.

According to a further aspect of the invention, a computer program product is provided comprising instructions which, when executed by a computer, cause the computer to carry out the method described above.

### BRIEF DESCRIPTION OF THE DRAWINGS

Embodiments of the invention will now be described by way of example with reference to the accompanying drawings.
Figure 1 shows a combine harvester wherein the radar sensor arrangement according to the invention may be advantageously used.
Figure 2 shows a side view of a combine harvester according to an embodiment of the invention.
Figure 3 shows a block diagram of a controller according to an embodiment of the invention; and
Figure 4 is a flowchart of a method for determining plant types in a field in front of an agricultural machine, according to an embodiment of the invention.

### DETAILED DESCRIPTION

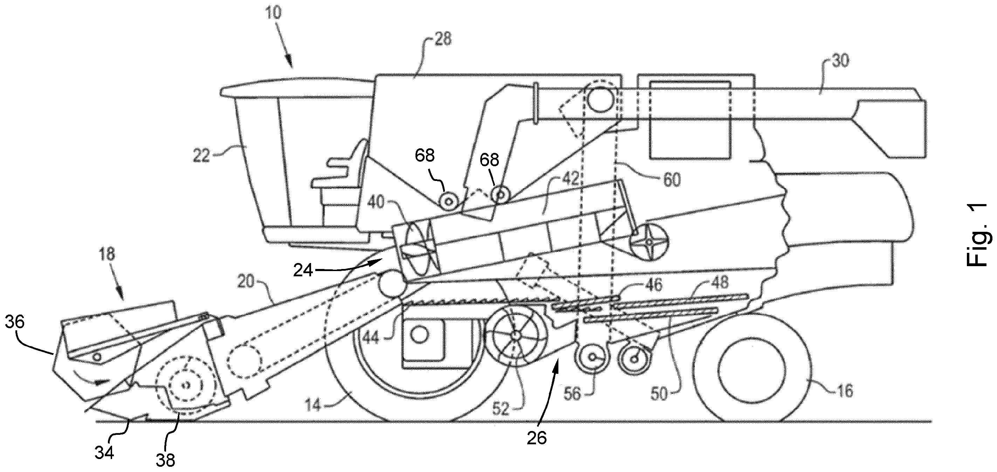

Figure 1 shows an agricultural harvester in the form of a combine harvester 10, which generally includes front and rear round engaging wheels 14, 16, a header 18, a feeder 20, an operator cabin 22, a threshing and separation system 24, a cleaning system 26, a grain tank 28 and an unloading tube 30. It should be appreciated that while the agricultural harvester is shown as a combine harvester 10, the agricultural harvester according to the present invention may be embodied by any construction that allows for crop material to be harvested, such as a conventional combine (which does not have a rotor), rotary combine, hybrid combine, chopper harvester, forage harvester, baler, etc.

The header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separating system 24.

The threshing and separating system 24 is of the axial-flow type and comprises a threshing rotor 40 at least partially located and rotatable within a threshing concave 42. The threshing concave may take the form of a perforated concave. Grain from the severed crop is threshed and separated from the MOG by the action of the threshing rotor 40 within the threshing concave 42. Larger elements of MOG, such as stalks and leaves do not pass through the perforations in the threshing concave 42 and are discharged from the rear of the combine harvester 10.

Grain and smaller elements of MOG (small MOG henceforth), such as chaff, dust and straw are small enough to pass through the perforations in the threshing concave 42 and are thence discharged from the threshing and separation system 24. Grain and small MOG that has successfully passed the threshing and separating system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a fore-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

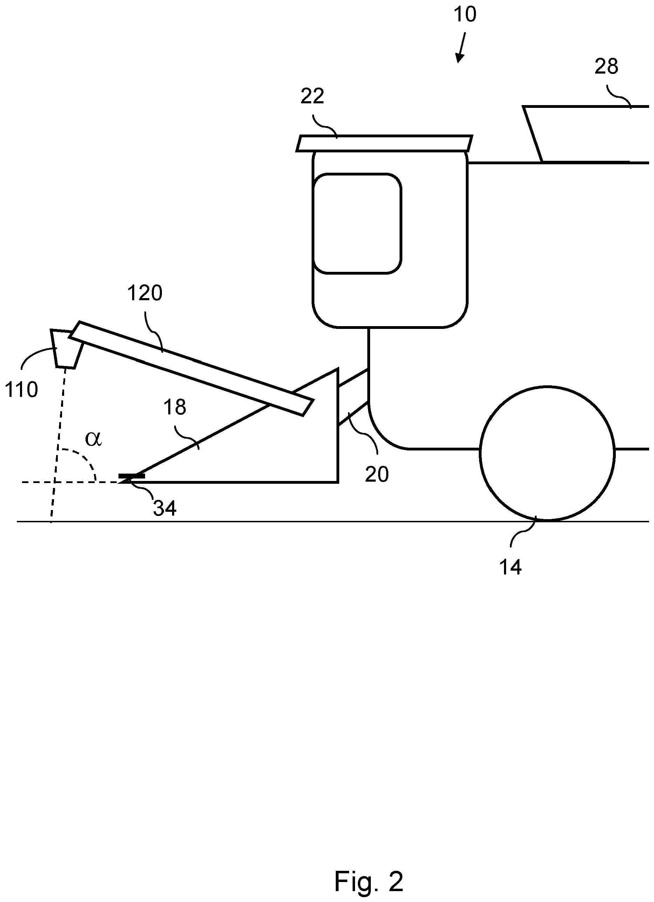

Figure 2 shows a side view of a combine harvester according to an embodiment of the invention. The combine harvester 10 of Figure 2 comprises a header 18 with a header frame and a cutting unit in the form of a cutter bar 34, and a radar sensor 110. The radar sensor 110 is configured to monitor the field in front of the combine harvester 10. In the example illustrated in Figure 2, the radar sensor 110 is mounted to the header 18 on a support beam 120. However, in other embodiments, the radar sensor 110 may be mounted on the feeder 20, the operator cabin 22, or attached in some other way to the combine harvester 10. In some embodiments, the radar sensor 110 may be attached to a drone or unmanned aerial vehicle (UAV) that follows (or leads) the combine harvester 10 during the harvesting process and exchanges data with a central controller for controlling the operation of the combine harvester 10 in dependence of sensor data obtained by the radar sensor 110 and/or other sensors provided on the drone or UAV.

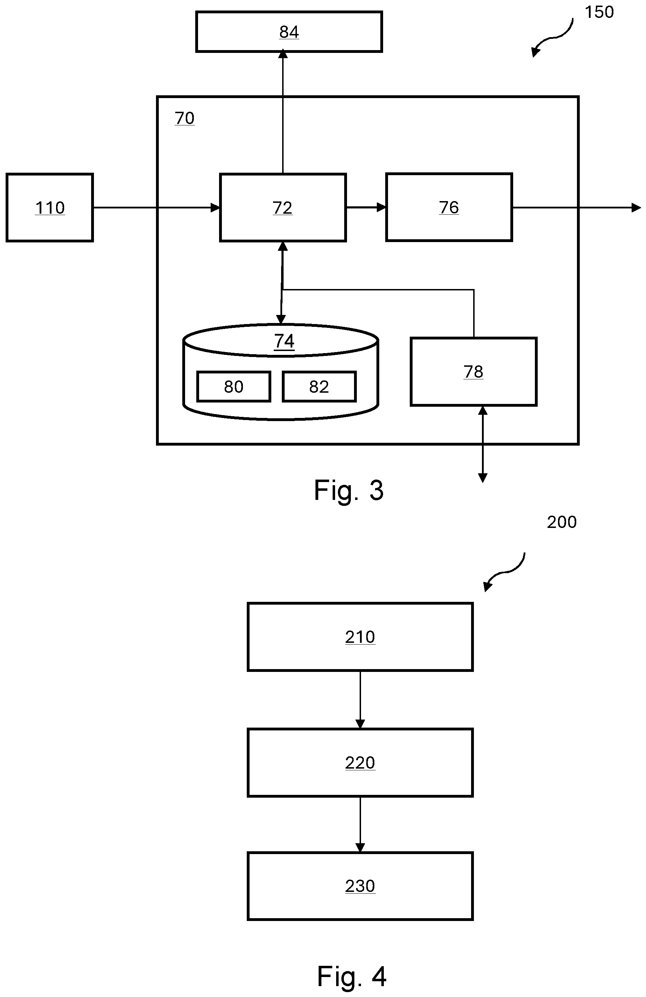

The radar sensor 110, comprising a radar transmitter and a radar receiver, emits radio waves, via the radar transmitter, along a downward direction towards the field in front of the cutter bar 34. The radar receiver detects the radio waves reflected from plant material in the field in front of the agricultural harvester 10. While the illustrated embodiment shows the radar transmitter and receiver in a single radar sensor 110, in other embodiments the radar transmitter and radar receiver may be separate components. 1D or 2D radar sensors may be used. Additionally, while only one radar sensor 110 is shown, multiple radar sensors may be used simultaneously. The reflected radio waves are sent to a controller operationally coupled to the radar sensor 110, and processed to distinguish different plant types and to detect weeds in the field. The processing of the radio waves is described in more detail with reference to Figure 3.

Figure 3 shows a block diagram of a control system 150 that may be used with the harvester 10 of Figure 2, according to an embodiment of the invention. In the described embodiment, the control system 150 is configured to distinguish two plant types, where the first plant type is a crop and the second plant type is a weed. However, in other embodiments, the control system 150 may be used to detect and distinguish multiple different crops in the field or for distinguishing young and harvest ready crops.

The control system 150 comprises the radar sensor 110, a controller 70, and a display device 84. The controller 70 is configured to carry out the method 200 described later with reference to Figure 4.

Briefly, the controller 70 receives a radar signal from the radar sensor 110. The radar signal comprises radio waves reflected from plant material in the field. The radar signal may also include radio waves reflected from the ground or from obstacles in the field. Radio waves reflected from obstacles (not including weeds) are not used when detecting and distinguishing plant types.. The controller 70 processes the radar signal to distinguish different plant types in the field, and to determine a plant height for each detected plant type. Based on the determined heights for each plant type, the controller 70 generates a control signal for adjusting operation of the harvester 10 in order to ensure continued operational efficiency. In some embodiments, data related to each of the detected plant types may be provided for display on the display device 84. The components and operation of the controller 70 is described in greater detail below.

The controller 70 comprises a processing engine 72 communicatively coupled to a datastore 74 and to an instruction generator 76. The controller 70 also comprises a location sensor 78, which monitors a real-time location of the harvester 10, and provides the real-time location data to the processing engine 72. The datastore 74 stores historical data 80 comprising a location of weeds previously detected in the field, and plant type data 82.

In the present embodiment, the field in front of the agricultural harvester (for example, the combine harvester 10 shown in Figure 2) includes a first plant type and a second plant type (i.e., crops and weeds). Different plant types have different characteristics, such as different heights, densities, moisture contents, and morphologies.

The processing engine 72 receives a radar signal from the radar sensor 110. Differences in plant characteristics cause differences in the radar signal reflected from different plant types, such as differences in the reflected intensity or signal pattern. For example, plants with a higher moisture content provide higher intensity radar signals. Thus, the processing engine 72 distinguishes the first plant type and the second plant type using the radar signal. In some embodiments, the processing engine 72 may apply machine learning algorithms to the radar signal to distinguish plant types.

The processing engine 72 also determines a plant height for each of the detected plant types. In other words, the processing engine 72 determines a first plant height for the first plant type and a second plant height for the second plant type. The first plant height and the second plant height may be determined using the radar signal. That is, radar signals reflected from the ground and from the first plant type and the second plant type may be used to determine the absolute height of the first plant type and the second plant type. The first plant height and the second plant height may be provided to the datastore 74 to be stored as plant type data 82. In some embodiments, the processing engine 72 determines additional plant type data 82 such as a quantity or a location of each plant type (discussed later), which is also stored in the datastore 74. In some embodiments, the datastore 74 may be accessible by multiple agricultural harvesters, such that all agricultural harvesters operating in the same area have access to the plant type data 82. In some embodiments, the plant type data 82 (including height and quantity of each plant type) may be provided to a display device 84 to be displayed to, for example, an operator of the harvester 10.

The processing engine 72 is also configured to determine if one of the detected plant types is a weed. As described briefly above, the processing engine 72 determines a first plant height for the first plant type and a second plant height for the second plant type. Determining that the first plant type or the second plant type is a weed may be based on a difference in height between the two detected plant types. Crops growing in a field are expected to have a constant height, and so any irregularities may indicate the presence of weeds. For example, the first plant height may correspond to the crop and the second plant height, which is different to the first, may correspond to the weed. Alternatively, a difference in plant heights may correspond to two crop levels, where the crop grows to a smaller height in one area of the field due to competing resources from weeds in that area of the field. Therefore, in response to there being a difference between the first plant height and the second plant type, the processing engine 72 determines that the second plant type is a weed (while the first plant type is a crop).

The processing engine 72 may also receive historical data 80 from the datastore 74, which is used alongside the height of the first plant type and the second plant type to determine that the second plant type is a weed. Historical data 80 indicates where weeds were previously detected in the field, and the processing engine 72 uses the historical data to predict more accurately if the first plant type or the second plant type is a weed. For example, if in a previous harvesting of the same field, weeds were detected at a particular location, the processing engine 72 predicts that weeds will be found at the same location during the present harvesting of the field. The location sensor 78 continuously monitors a real-time location of the harvester 10, and provides the real-time location to the processing engine 72. The processing engine 72 uses the real-time location of the harvester 10 and the historical data 80 to predict if the area of field in front of the harvester 10 has weeds. The location sensor 78 may be, for example, a GPRS sensor, or any other suitable sensor.

As mentioned briefly above, alongside the height of each plant type, in some embodiments the processing engine 72 may also determine an amount and a location of the first plant type or the second plant type. In other words, the processing engine 72 may determine the quantity and location of crops or weeds in the field in front of the harvester 10. Determining the quantity and location of weeds is important for determining if or how operation of the agricultural harvester should be adjusted to avoid harvesting weeds or to process accidentally harvested weeds efficiently (described later).

Considering firstly the amount (quantity) of each plant type, the processing engine 72 determines the amount of the first plant type (crop) or the second plant type (weed) based on the radar signal. The processing engine 72 may also determine a location of the first plant type or the second plant type using the radar signal. In more detail, the processing engine 72 processes the radar signal to determine a distance between the radar sensor 110 (which may be mounted on the combine harvester 10) and each detected plant type. The location sensor 78 monitors a real-time location of the harvester 10. The location of the first plant type or the second plant type (crops or weeds) in the field can therefore be determined based on the distance determined by the radar signal and the real-time location of the harvester 10 in the field monitored by the location sensor 78. A location of detected weeds may be provided to the datastore 74 to be stored as plant type data 82. In some embodiments, the location of weeds in the field is stored as a georeferenced map. The location of detected weeds becomes historical data 80 once harvesting is complete.

In some embodiments, the processing engine 72 may also receive a camera image, where the camera image comprises data on plant material in the field in front of the combine harvester 10. The camera image may show, for example, a colour or morphology of different plant types in the field. The camera images may be received from a conventional camera, a stereo camera, or a LiDAR sensor mounted on the harvester 10, for example on the header 18. Alternatively, the camera images may be satellite images recorded by and received from a drone or UAV monitoring the field. The camera images may be recorded prior to harvesting the field (e.g. the day before harvesting), or in real-time while harvesting is taking place. Using on the camera images, the processing engine 72 detects different plant types based on, for example, colour. Different plant types (for example, crops and weeds) are typically different colours, and thus variation in colour in a camera image provides a method for detecting and distinguishing different plant types. The camera images may also be used to determine the height of the first plant type and the second plant types.

Alongside camera images comprising data of plant material in the field, in some embodiments the processing engine 72 may additionally or alternatively receive camera images comprising data on harvested plant material. The camera images may be received from a camera inside the harvester, for example on the feeder 20 or on the threshing and separating system 24, or from a camera on the header 18, downstream of the point where the plant material is harvested from the field. The processing engine 72 may use the camera images of the harvested plant material to detect the first plant type and the second plant type.

Detecting the first plant type and the second plant type using camera images of harvested plant material, alongside the radar signal, makes the detection method carried out by the controller 70 more accurate and robust. For example, based on the radar signal, the processing engine 72 may distinguish two plant types (crops and weeds), determine that each of the detected plant types has a different height, and thus determine that one of the detected plant types is a weed. However, the two different plant heights may simply correspond to the same plant type (a crop), where a portion is standing and a portion is partially hanging/lodged. On receiving camera images of harvested plant material, the processing engine 72 may determine that all of the harvested material is of the same plant type based on, for example, plant colour. Thus, camera images of harvested plant material allows the processing engine 72 to confirm or negate the presence of different plant types (for example, crops and weeds) as detected based on the radar signal. In alternative embodiments, instead of camera images, data on harvested plant material may be received from sensors located inside the harvester 10, for example a near IR sensor (NIR sensor), a (sub)TeraHertz sensor, or an internal weed seed sensor, for example a sensor that detects the presence of weeds seeds based on the characteristic impact the weed seeds make on that sensor.

Returning to Figure 3, as described above the processing engine 72 determines a first plant height for the first plant type (i.e., a crop) and a second plant height for a second plant type (i.e., a weed). The first plant height and second plant height are provided to the instruction generator 76. Based on the first plant height and the second plant height, the instruction generator 76 generates a control signal for adjusting an operation of the combine harvester 10. In other words, the instruction generator 76 determines how operation of the harvester should be adjusted in response to determining the presence of multiple plant types with different heights in the field.

The control signal comprises instructions to adjust an operation of the harvester 10. Depending on the first plant height and the second plant height, different instructions are generated and output from the controller 70. The instructions may include instructions to adjust a driving speed of the harvester 10, adjust operation of the threshing and separation system 24 and/or the cleaning system 26 of the harvester 10, adjust operation of a residue chopping and spreading section of the harvester 10, activate (or increase/decrease a power of, or adjust the flow of harvested material to bypass or not bypass) a weed seed destroyer, adjust a height of the reel 36 of the harvester 10, adjust a height of the header 18 of the harvester 10, or adjust a driving path of the harvester 10. Some examples of how the controller 70 may adjust an operation of the harvester 10 in response to determining different plant types are described in more detail below.

When the controller 70 detects weeds in the field, and determines that the weeds are higher than the crops (the second plant height is greater than the first plant height) then the control signal comprises instructions to raise the header 18 of the harvester 10 to a height greater than both plant types, so that no crops or weeds or harvested. Alternatively, the control signal may comprise instructions to raise the reel 36 of the harvester 10, so that no weeds become entangled in the harvester 10. In this way, harvesting of weeds, which negatively impacts the performance of the harvester 10, is avoided.

When the controller 70 determines that there are undergrowing weeds in the field (the second plant height is less than the first plant height), then the control signal comprises instructions to raise the header 18 to a height between the first plant height and the second plant height, so that taller crops are harvested, but no weeds are picked up. Accordingly, accidental harvesting of weeds is prevented, which prevents unnecessary power being used by the combine harvester 10.

In some embodiments, the amount (quantity) of the first plant type or the second plant type in the field may also be used by the instruction generator 76 to generate a control signal for the harvester 10. As described above, the processing engine 72 may determine an amount of the first plant type or the second plant type, i.e., the quantity of crops or weeds in the field, using the radar signal. The amount may be an absolute value, or a ratio of the amount of weeds compared to the amount of crops. The amount may be sent from the processing engine 72 to the instruction generator 76, and used alongside the height of each plant type to generate a control signal for adjusting an operation of the harvester 10.

The amount of weed is important to know when determining how operation of the harvester should be adjusted to ensure operational efficiency and high yield. For example, if the processing engine 72 determines that there is a high amount of weed, then the instruction generator 76 generates a control signal comprising instructions to decrease a forward speed of the harvester 10, to ensure that the load on the harvester 10 remains constant. Additionally or alternatively, the control signal may comprise instructions to activate or increase the power of a weed seed destroyer, in order to process harvested weeds effectively.

In some embodiments, the processing engine 72 may determine the second plant type, and retrieve information related to the second plant type from, for example, an online database (not illustrated). That is, the processing engine 72 may determine that the second plant type is a weed and retrieve information related to the weed from a database. In some embodiments, the processing engine 72 may retrieve data relating to the specific size and weight of weed seeds. This data is helpful to understand how harvested weed seeds are processed by the harvester 10: larger weed seeds will fall through sieves of the agricultural harvester 10 together with the crops, while smaller weed seeds are removed alongside the chaff.

In some embodiments, the processing engine 72 may send the data relating to the size and weight of weed seeds alongside the data relating to the amount of weeds and crops to the instruction generator 76. Based on the data, the instruction generator 76 generates a control signal to adjust operation of the agricultural harvester. For example, in the case where a large amount of weeds are detected, and the weed seeds are determined to be large, the control signal may comprise instructions to activate the weed seed destroyer to destroy the weeds, and instructions to close off all of the sieves of the agricultural harvester 10, causing all harvested plant material to be fed through the weed seed destroyer, thus destroying crops and weeds. An econometric optimizer may be used by the instruction generator 76 when generating such control signals, to balance the cost of fuel to destroy weeds but lose all grains with the cost of chemicals to remove all weeds via chemical spraying if weeds are not harvested, and the possible risk of lower yield when weeds remain in field. In some embodiments, the data relating to the amount of weeds and crops in the field and the size and weight of the weed seeds is provided to a display 84 to be viewed by an operator of the agricultural harvester 10. The operator may then use this information to determine an adjustment to the operation of the agricultural harvester 10, balancing the different conditions described above.

Additionally, in some embodiments, a location of the weed (determined in the manner described previously) may also be provided from the processing engine 72 to the instruction generator 76. As a result, the instruction generator may generate a control signal comprising instructions to change a forward path of the harvester 10 in order to avoid the weeds in the field. Accordingly, accidental harvesting of weeds is avoided.

Turning to Figure 4, Figure 4 is a flowchart showing a method 200 for determining plant types in a field in front of an agricultural harvester. The method may be carried out by the controller 70 of Figure 3, and with the harvester 10 and radar sensor 110 of Figure 2. The method 200 comprises firstly, at Step 210 receiving a radar signal, the radar signal being a reflection of a radio wave from plant material in the field in front of the agricultural harvester. The method further comprises, based on the radar signal, distinguishing, at Step 220, a first plant type and a second plant type in the plant material. As described previously, different plant types have different characteristics, which result in differences in the radar signal reflected by each plant type. Thus, the radar signal allows different plant types in the field to be recognized. The method further comprises determining, at Step 330, a first plant height for the first plant type and a second plant height for the second plant type, the second plant height being different from the first plant height.

Greater detail on the steps of receiving the radar signal, distinguishing a first and second plant type, and determining a first plant height and a second plant height, alongside additional method steps that may be included were described above with reference to the functionality of the control system 150 of Figure 3. The detail therein will be understood to apply equally to the method 200.

## Claims

1. A method (200) for determining plant types in a field in front of an agricultural harvester, the method comprising:
receiving (210) a radar signal, the radar signal being a reflection of a radio wave from plant material in the field in front of the agricultural harvester;
based on the radar signal, distinguishing (220) a first plant type and a second plant type in the plant material; and
determining (230) a first plant height for the first plant type and a second plant height for the second plant type, the second plant height being different from the first plant height.

2. The method (200) of claim 1, further comprising, based on the radar signal, determining a plant density, a moisture content of the plant material, or a morphology of the plant material, and wherein the distinguishing the first plant type and the second plant type is based on the plant density, the moisture content of the plant material, or the morphology of the plant material.

3. The method (200) of claim 1 or 2, further comprising determining that the second plant type is a weed.

4. The method (200) of claim 3, wherein the determining that the second plant type is a weed is based on a difference between the first plant height and the second plant height.

5. The method (200) of any preceding claim, wherein determining (230) the first plant height or the second plant height is based on the radar signal.

6. The method (200) of any of the preceding claims, further comprising:
receiving historical data, the historical data comprising a location of weeds previously detected in the field;
based on the historical data determining that the second plant type is a weed.

7. The method (200) of any of the preceding claims, further comprising:
receiving a camera image of the plant material in the field in front of the agricultural harvester;
detecting the first plant type or the second plant type based on the camera images; and
determining the first plant height or the second plant height based on the camera image.

8. The method (200) of any preceding claim, further comprising at least one of:
determining a location of the first plant type or the second plant type based on the radar signal;
determining an amount of the first plant type or the second plant type in the field in front of the agricultural harvester based on the radar signal.

9. The method (200) of any preceding claim, further comprising:
receiving a camera image of harvested plant material,
detecting the first plant type and the second plant type based on the camera image of the harvested plant material.

10. The method of any preceding claim, further comprising generating a control signal for adjusting an operation of the agricultural harvester in dependence of the first plant height and/or the second plant height.

11. The method (200) of claim 9, wherein the control signal comprises instructions for the agricultural harvester to do at least one of the following:
adjust a driving speed of the agricultural harvester,
adjust operation of a threshing and/or cleaning section of the agricultural harvester,
adjust operation of a residue chopping and spreading section of the agricultural harvester
activate or adjust operation of a weed seed destroyer,
adjust a height of a reel of the agricultural harvester,
adjust a height of a header of the agricultural harvester, or
adjust a path of the agricultural harvester.

12. The method (200) of claim 10, wherein the control signal comprises instructions for the agricultural harvester to bring the height of the header to a height greater than or between the first plant height and the second plant height.

13. The method (200) of any preceding claim, further comprising storing data related to the first plant type and the second plant type, wherein the data comprises a location of the first plant type or the second plant type in the field.

14. The method (200) of any preceding claim, further comprising displaying, on a display device, data related to the first plant type or the second plant type, wherein the data comprises at least one of;
the first plant height or the second plant height;
a location of the first plant type or the second plant type;
an amount of the first plant type or the second plant type in the field;
a density of the first plant type or the second plant type; or
a volume of the first plant type or the second plant type.

15. An agricultural harvester (10) comprising:
a radar sensor (110) configured to receive a radar signal being a reflection of a radio wave from plant material in a field in front of the agricultural harvester (10); and
a controller (70), operationally coupled to the radar sensor (110) and configured to carry out the method (200) of any of claims 1 to 14.

16. A computer program product comprising instructions which, when executed by a computer, cause the computer to carry out the method (200) of any of claims 1 to 14.
